# EUROPEAN PATENT APPLICATION

(11) **EP 3 884 770 A1**
(43) Date of publication of application: **29.09.2021**
(21) Application number: 21155361.5
(22) Date of filing: 05.02.2021
(51) Int. Cl.: A01J 25/00, A23C 20/02

(54) **VEGETABLE SUBSTITUTE OF AGED OR PLASTIC TYPE CHEESE AND PROCESS FOR PREPARATION THEREOF**

(30) Priority: 26.03.2020 IT 202000006394
(71) Applicant: Vegandelicious Srl, 00191 Roma (IT)
(72) Inventor: Martella, Sauro, 00191 Roma (IT)
(74) Representative: Leganza, Alessandro

(57) **Abstract**

The present invention relates to a plant-based substitute of hard or plastic cheese and process for preparation thereof. In particular, the invention concerns the so-called vegetable cheeses such as Parmesan, Grana, Pecorino, Scamorza, etc., which can be prepared by means of the specific ingredients of the invention and process thereof, wherein said process avoids the long aging phase.

## Description

### Technical field

The present invention relates to a plant-based substitute of cheese, in particular, the substitute of cheese characterized by the flake structure and an efficient process for preparation thereof.

### Backgroud of the invention

The traditional cheese production has always been carried out using the animal milk as a basic ingredient. In recent years, the spread of greater ecological awareness combined with the increasingly widespread feeling of empathy towards animal sufferings, as well as the search for a healthier diet, therefore without animal fats, has seen to reach on the market and to obtain the satisfaction of consumers of different vegetable alternatives to the classic cheese. These alternatives, however, are characterized by a different structure, which gives them a different appearance, and by the lack of organoleptic qualities, to the point of not making them in any way comparable to traditional cheeses either in taste, or in texture i.e. in structure, or in appearance.

The few existing proposals concerning to the imitation of hard and aged cheeses are made with formulas and processes that fail to obtain appreciable results in terms of structure (texture) and shelling of the product when it is broken by hand, with a knife or with machineries, with the result of not being comparable, in aspect and in behaviour when cut, to the original traditional product of animal milk based, because they are more rubbery, oily or floury, and in no case really attributable to the original dairy product.

### Summary of the invention

Therefore, the problem addressed by the present invention is that of providing a plant-based substitute of hard or plastic cheese that has the same flake structure, and therefore the same characteristics of graininess, shelling or plasticity, and also the same characteristics when cut, of the corresponding typical animal milk based products.

The product of the present invention imitates in the best possible way all wide array of hard (and aged) cheeses such as Parmesan, Grana, Pecorino and all those other similar products characterized by a flake, granular, fibrous and dry structure, or of plastic cheeses that have plastic characteristics such as the classic Scamorza, Caciocavallo, etc.

Moreover, as a further problem, there is that of providing a process for the preparation of vegetable substitutes of hard or plastic cheeses without having to carry out long and expensive processing and aging phases.

Furthermore, the process of the invention advantageously allows the preparation of vegetable cheeses without any use of gluten, and thus allowing to obtain vegetable gluten-free cheeses. Furthermore, vegetable cheeses do not contain any ingredients of animal origin.

Therefore, the present invention solves the aforementioned problems, by means of the product and the process as outlined in the annexed claims, whose definitions are an integral part of the present description, allowing to produce vegetable substitutes of hard or plastic cheeses, characterized by the granular and fibrous or plastic structure, and of the same behaviour when cut of the corresponding traditional cheeses, without requiring the long processing and aging phase, and, moreover, preferably, except from gluten, i.e. gluten-free.

This invention indeed uses simple and cheap ingredients, a simple and very fast preparation process, without the aging phase, therefore it is particularly advantageous in terms of cheapness for applications especially on a large industrial scale.

Another object is a plant-based substitute of hard or plastic cheese, obtainable from said process, in particular, except from gluten, that is comprising from 0.001 to 20 ppm of gluten.

Further features and advantages of the plant-based substitute of hard or plastic cheese and the process for preparation thereof will result from the description of the examples of realization of the invention, provided as an indication of the invention.

### Brief description of the figures

Fig.1 shows the flaking of the vegetable substitute of hard cheese of the invention, wherein there is the granular, fibrous and flakes structure, that is characteristic of typical aged Parmesan cheese.
Fig. 2 shows more elastic, soft e less granular flaking of the vegetable substitute for plastic cheese of the invention, that is characteristic of typical Scamorza cheese.
Fig. 3 shows in detail the flaking of the vegetable substitute of hard cheese of the invention, wherein there is the granular, fibrous and flakes structure, that is characteristic of typical aged Parmesan cheese.
Fig. 4 shows the creation in mould of the typical shape of Scamorza.
Fig. 5 shows the creation of vegetable cheese in different forms and moulds.

### Detailed description of the invention

The object of the present invention is a plant-based substitute of hard or plastic cheese comprising from 10% to 70% weight/weight (abbreviated w/w) of wheat starch.

It has been in fact surprisingly found that wheat starch gives the plant-based substitutes of hard or plastic cheese the same granular and fibrous structure, and therefore the same granularity and fibrousness or plasticity characteristics, and also the same characteristics when cut, of the corresponding typical animal milk based products.

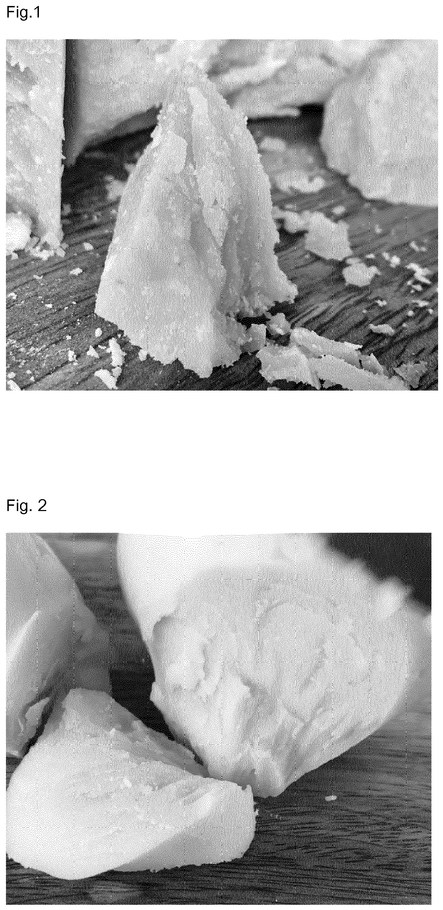

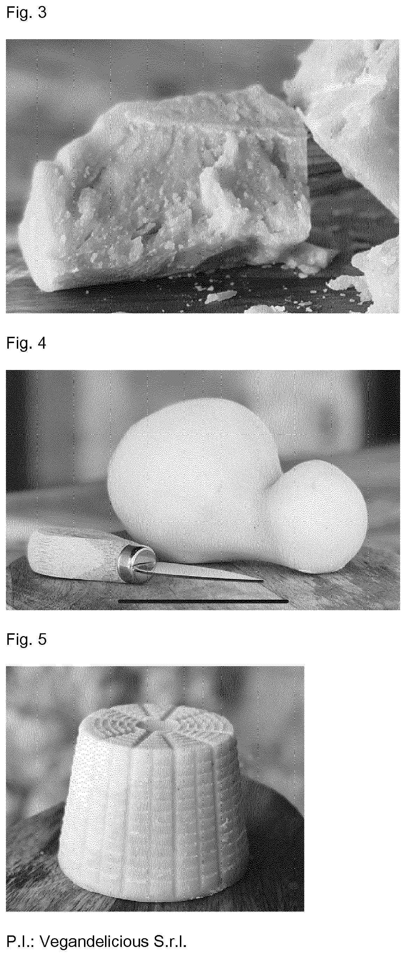

The granular and fibrous, flake structure, (see Fig. 1 and 3) is what that characterizes the hard cheeses such as Grana, Grana Padano, Parmesan, Parmigiano Reggiano, Pecorino, etc., while the plastic structure (see Fig. 2 (and 4)) is the one that characterizes the plastic cheeses such as Scamorza, Caciocavallo, etc.

Wheat starch, in addition to conferring the structural characteristics above mentioned, provides the vegetable substitutes of hard or plastic cheeses with the same behaviour when cut and the same typical shelling of the corresponding traditional cheeses. This effect is evident from the examination of figs. 1, 2, and 3.

Therefore, wheat starch allows the preparation of vegetable substitutes of hard or plastic cheeses having both the same appearance, i.e. the appearance of the corresponding traditional cheeses, and the same behaviour when cut and the same shelling, thus improving the interest on the part of consumers.

The grainy appearance reflects the grainy structure, that is the grainy constitution of the product.

A grainy product is a product made of small grains and/or which contains granules, or which is made of small grains, which contains granules or has outgrowths in the form of granules; and which, for example, has a grainy or granular surface. The greater is the granularity, the bigger is the grain. This granularity produces the "flakes" breakage typical of aged dairy products.

The object of the present invention is therefore a plant-based substitute of hard or plastic cheese and the process for preparation thereof.

The plant-based substitute of hard or plastic cheese is a vegetable substitute cheese of hard or plastic cheese.

According to a preferred embodiment, the plant-based substitute of hard or plastic cheese is a hard and aged cheese.

The present invention relates to a vegetable substitute of hard or plastic cheese, wherein hard cheese means a cheese with a consistency and structure like that of the traditional Parmesan, Grana, Pecorino, etc., while plastic cheese means a cheese with a consistency and structure like that of the traditional Scamorza, Caciocavallo, etc.

The term vegetable substitute of hard or plastic cheeses refers, therefore, to plant-based substitutes products for traditional cheeses that are made of substances of animal origin, such as milk and derivatives.

The term vegetable substitute of hard or plastic cheese includes, therefore, vegetable substitutes for cheese and therefore vegetable Grana, vegetable Parmesan, vegetable Parmigiano Reggiano, vegetable Pecorino, vegetable Scamorza, vegetable Caciocavallo, and similar vegetable cheeses, etc.

The term plant-based substitute for cheese can indeed also be abbreviated from the term plant-based cheese or vegetable cheese.

The term plant-based substitute for cheese therefore includes plant-based products that reproduce in the best possible way, for example, the classic cheese but without ingredients of animal origin.

According to a preferred embodiment, the plant-based substitute of hard or plastic cheese is gluten-free.

According to a preferred embodiment, the plant-based substitute of hard or plastic cheese does not contain any ingredients of animal origin, therefore it is a so-called vegan product.

According to a preferred embodiment, the plant-based substitute of hard or plastic cheese comprises ingredients of only plant origin, and, according to a more preferred embodiment, the plant-based substitute of hard or plastic cheese consists of ingredients of only plant origin.

According to a preferred embodiment, the plant-based substitute of hard or plastic cheese comprises from 10% to 40% w/w of wheat starch, more preferable from 20% to 40% w/w.

According to a preferred embodiment, the plant-based substitute of hard or plastic cheese further comprises:
- from 1% to 30% w/w of potato flakes,
- from 2% to 55% w/w of coconut oil, or other saturated vegetable oil,
- from 20% to 80% w/w of purified water.

Coconut oil is preferred as compared to other saturated vegetable oil.

According to a more preferred embodiment, therefore, the plant-based substitute of hard or plastic cheese comprises:
from 10% to 70% w/w wheat starch,
from 1% to 30% w/w of potato flakes,
from 2% to 55% w/w coconut oil, or other saturated vegetable oil,
from 20% to 80% w/w of purified water.

According to a more preferred embodiment, the plant-based substitute of hard or plastic cheese, further comprises:
from 2% to 10% w/w of potato flakes,
from 2% to 40% w/w coconut oil, or other saturated vegetable oil,
from 20% to 40% w/w of purified water.

According to a more preferred embodiment, therefore, the plant-based substitute of hard or plastic cheese comprises:
from 10% to 40% w/w wheat starch,
from 2% to 10% w/w of potato flakes,
from 2% to 40% w/w coconut oil, or other saturated vegetable oil,
from 20% to 40% w/w of purified water.

According to an again more preferred embodiment, therefore, the plant-based substitute of hard or plastic cheese comprises:
from 20% to 40% w/w wheat starch,
from 2% to 10% w/w of potato flakes,
from 2% to 20% w/w coconut oil, or other saturated vegetable oil,
from 20% to 40% w/w of purified water.

According to a preferred embodiment, the plant-based substitute of hard or plastic cheese comprises wheat starch, wherein the wheat starch is swallowed wheat starch or an equivalent or similar swallowed starch.

According to a preferred embodiment, the plant-based substitute of hard or plastic cheese can comprise one or more of the following further ingredients:
- from 0,10% to 25% w/w of chickpea flour,
- from 0.10% to 15% w/w of pea, soy, rice or similar protein,
- from 0,10% to 8% w/w yeast flakes,
- from 0.05% to 8% w/w onion powder,
- from 0.50% to 4% w/w salt,
- from 0.1% to 1.90% w/w citric acid,
- from 0.1% to 1.90% w/w lactic acid,
- from 0.10% to 1.99% w/w of a mixture of kappa, iota and lambda carrageenan,
- from 2% to 25% w/w fruit juice,
- from 10% to 30% w/w olive or seed oil.

According to a more preferred embodiment, the plant-based substitute of hard or plastic cheese can comprise one or more of the following further ingredients:
- from 0.50% to 10% w/w of chickpea flour,
- from 0.10% to 5% w/w of pea, soy, rice or similar protein,
- from 0,10% to 4% w/w yeast flakes,
- from 0.05% to 4% w/w onion powder,
- from 0.50% to 4% w/w salt,
- from 0.1% to 1.90% w/w citric acid,
- from 0.1% to 1.90% w/w lactic acid,
- from 0.10% to 1.99% w/w of a mixture of kappa, iota and lambda carrageenan,
- from 2% to 15% w/w fruit juice,
- from 10% to 20% w/w of olive or seed oil.

According to a more preferred embodiment, the plant-based substitute of hard or plastic cheese can comprise as a further ingredient from 1% to 5% w/w of chickpea flour.

The fruit juice can be pear, apple or other fruit juice able to give sugary aromatic notes such as banana juice, mixed fruit juice. Preferably the fruit juice is pear juice.

According to a preferred embodiment, the product can contain one or more further ingredients chosen from the group of potato starch, corn starch, rice starch, pepper, liquid haze, flavourings, acidity regulator, gelling agents, thickeners, yeasts, proteins, spices. Said further ingredients have aromatic, preservation or other purposes of the product.

The same product is obviously also obtainable with the use of fresh ingredients, simply by proportionally reducing the liquid part no longer necessary for the rehydration of dried ingredients. For example, as an alternative to potato flakes, fresh potatoes can be used by decreasing the percentage of water needed to hydrate them until the boiled potato is hydrated. Or, for example, it is possible to use cooked chickpeas instead of chickpea flour and in this case the percentages will have to be recalculated to use the same amount of hydrated product.

Another object is a process for the preparation of a plant-based substitute of hard or plastic cheese comprising the following steps:
A) in a suitable container preparing a mixture comprising:
   - from 10% to 70% w/w wheat starch,
   - from 1% to 30% w/w of potato flakes,
   - from 2% to 55% w/w coconut oil, or other saturated vegetable oil,
   - from 20% to 80% w/w of purified water;
B) combining until to obtain a homogeneous dough;
C) filling the inside of moulds or casings with the homogeneous dough prepared in step B) and inserting said moulds or casings into bags for vacuum cooking, applying vacuum and hermetically closing them, or
   filling the inside of moulds with the homogeneous dough prepared in step B) and hermetically closing them;
D) cooking the homogeneous dough inside the moulds or casings of step D) at a temperature comprised from 40°C to 110°C for a time comprised from 30 to 120 minutes;
E) alternatively, to steps C) and D), cooking the homogeneous dough of step B) at a temperature comprised from 40°C to 110°C for a time comprised from 30 to 120 minutes, then inserting the cooked dough into the moulds, and then inserting the moulds into bags for vacuum cooking, applying the vacuum and hermetically closing them;
F) reducing the temperature of the product of step D) or E) to a temperature comprised from -40°C to 10°C.

This process allows to obtain in short times a vegetable substitute for cheese with a structure (texture) absolutely identical to the reference cheese of animal origin, presenting the same degree of shelling or crumbling and the same properties when cut of the traditional product when it is broken, by hand, with a knife or with machineries, and moreover, surprisingly, completely eliminating the long and expensive aging phase.

Indeed, the process allows to obtain vegetable substitutes of hard or plastic cheese (e.g. Parmesan, Pecorino, Scamorza, etc.) already at the end of the process itself, without the need to let the product mature to take on the typical structure and consistency of said cheeses.

The cooking phase D) or E) plays a key role in achieving this important result, i.e. the elimination of the aging phase with an important impact on industrial scale productions, since it has a highest impact on productivity (cycle-time) which can therefore be greatly increased and on production costs which are significantly reduced.

The process is fast and economically very advantageous thanks to the absence of the fermentation and aging phase. Since, said process involves cooking the dough, the resulting product can be marketed already a few hours from the start of production, allowing production times to be optimized without any need for long, complicated and expensive dryings or agings, generating an economic saving, and a huge logistical simplification.

The carried out experimentation has indeed allowed to verify that the fermentation or aging phase, in addition to making the uneconomical process, when was applied to vegetable cheeses, it did not provide the desired results because it was too conditioned by external elements that were not always governable (mildew reactions, internal cracks of the product, sour taste not always pleasant, etc.). The process of the invention has solved this problem.

In fact, the quantities of the ingredients in step A) and the proportions can be changed to obtain doughs of different consistencies and with many variations by working on the percentages of the ingredients, even adding flavourings to the dough and creating more lines of doughs of colours and flavours.

Steps C) and D) are carried out for the preparation of the vegetable substitute of hard cheese, while step E) is carried out for the preparation of the vegetable substitute for plastic cheese.

According to a more preferred embodiment of the process, in step A) the mixture comprises:
from 10% to 40% w/w wheat starch,
from 2% to 10% w/w of potato flakes,
from 2% to 40% w/w coconut oil, or other saturated vegetable oil,
from 20% to 40% w/w of purified water.

According to a preferred embodiment of the process, in step A) the mixture can comprise one or more of the following further ingredients:
- from 0,10% to 25% w/w of chickpea flour,
- from 0.10% to 15% w/w of pea, soy, rice or similar protein,
- from 0,10% to 8% w/w yeast flakes,
- from 0.05% to 8% w/w onion powder,
- from 0.50% to 4% w/w salt,
- from 0.1% to 1.90% w/w citric acid,
- from 0.1% to 1.90% w/w lactic acid,
- from 0.10% to 1.99% w/w of a mixture of kappa, iota and lambda carrageenan,
- from 2% to 25% w/w fruit juice,
- from 10% to 30% w/w olive or seed oil.

According to a more preferred embodiment of the process, in step A) the mixture can comprise one or more of the following further ingredients:
- from 0.50% to 10% w/w of chickpea flour,
- from 0.10% to 5% w/w of pea, soy, rice or similar protein,
- from 0,10% to 4% w/w yeast flakes,
- from 0.05% to 4% w/w onion powder,
- from 0.50% to 4% w/w salt,
- from 0.1% to 1.90% w/w citric acid,
- from 0.1% to 1.90% w/w lactic acid,
- from 0.10% to 1.99% w/w of a mixture of kappa, iota and lambda carrageenan,
- from 2% to 15% w/w fruit juice,
- from 10% to 20% w/w of olive or seed oil.

According to a preferred embodiment of the process, in step A) the mixture can comprise as a further ingredient from 1% to 5% w/w of chickpea flour.

According to a preferred embodiment, the process allows the production of a high-quality product using exclusively powdered products (to which only water, fruit juice and oil, as liquid ingredients, will be added). This embodiment allows to further optimize the costs of raw material, storage, elimination of waste and precision of the quantities in the preparation of the doughs.

The percentages of the components mentioned in step A), and in any case in the text of the present invention refer to percentages weight/weight, meaning for the latter the total weight of the homogeneous dough obtained at the end of step B).

In step A), the ingredients can be in the form exactly the same, i.e. they can be fresh ingredients, or they can be dried ingredients, ingredients in powder form, dehydrated powder, etc.

According to a preferred embodiment, the ingredients of the mixture of step A) are powdered ingredients. To the mixture thereof, in the second part of step A), the other liquid ingredients are added.

According to a preferred embodiment, by using of powdered ingredients, the process of the preparation of the plant-based substitute of hard or plastic cheese is greatly speeded up, furthermore wastes are greatly reduced and the storage costs of raw materials and the precision of the quantity in the preparation of the ingredients in step A) are optimised.

According to a preferred embodiment, in step A) firstly the solid powdered ingredients are mixed, obtaining a more or less homogeneous mixture of powdered solids, then the ingredients in the liquid state are added, preferably, already previously premixed or emulsified with each other.

In step A), preferably, firstly the powdered ingredients are mixed respecting the types/proportions of the ingredients.

These proportions allow to calibrate the behaviour of starches both in the starting gelling process (hot phase), and during the subsequent crystallization process.

According to a preferred embodiment, in the process in step A) firstly the powdered ingredients are mixed thus to obtain a homogeneous mixture of powdered ingredients, and then the ingredients in the liquid state are added, preferably, already previously premixed or emulsified with each other. Ingredients in the liquid state are for example water.

According to a preferred embodiment, in step A) the wheat starch is swallowed wheat starch.

In step A), according to a preferred embodiment, once the powdered ingredients have been mixed, the liquid ingredients are added, preferably, previously premixed or emulsified with each other.

In step B), it is mixed until a homogeneous dough is obtained. Said homogeneous and workable by hand dough, in step C) can be pressed inside moulds or casings (if stuffed) for subsequent cooking (step D), or subjected to cooking before to be placed into the moulds (step E).

In step C) the moulds must be tightly closed and vacuum cased before cooking to prevent the expansion of the dough during cooking.

In step D) the homogeneous dough is cooked. It is possible to cook in many different ways, for example with a traditional oven, convection oven, boiling, steaming, etc., thus allowing the optimization of costs and production with existing machineries.

The moulds or casings are placed into bags for vacuum cooking (suitable for sustaining the high temperatures foreseen for the necessary time determined by the diameter of the product) and they are cooked at a temperature comprised from 40°C to 110°C (to be defined based on the gelatinization temperature of the starch or used starches), preferably comprised from 40°C to 90°C or in any case within the limits specified in the technical data sheet of the used vacuum bag. In the cooking phase, the contained starches, thanks to the environment that contains high percentages of water (starches that are preferably higher than 25%), carry out the non-reversible process of gelatinization (they lose their ordered structure and take on a disordered one. Amylose and Amylopectin enter into solution with water, forming bonds with it, consequently free water decreases, increasing the shelf life of the product and the viscosity of the solution). This process also implies a considerable increase in volume (about 20/30%).

After cooking in a time comprised from 30 to 120 minutes in proportion to the used cooking temperature and the total mass of the product in the mould, in step F) the product, still bagged, is placed inside a blast chiller at a temperature comprised between -40°C and +10°C, preferably -20°C, for the necessary time for the internal cooling of the product (therefore, in proportion to the weight and to the shape of each wheel).

In step E) the cooked dough is pressed into the moulds (the dough remains workable even after cooking if kept warm, therefore it will be possible to press it well into the moulds), and then it is put to cool in a vacuum bag to limit the surface oxidation and drying .

In step D) or E) it is cooked in the oven or with an equivalent method, until reaching a temperature comprised between 40°C and 110°C. It is maintained at this temperature for a time comprised from 30 minutes to 120 minutes, or with further tolerances.

According to a preferred embodiment, the temperature in step D) or in step E) is a temperature comprised from 40°C to 90°C.

In step F), once the wheels have been refrigerated in the vacuum cooking bags, if stuffed into a casing, they can already be labelled and placed in the cold rooms ready to be distributed while maintaining the cold chain at -4°C, instead whether they have been using moulds, the wheels must be left to cool further for the next 24/48 hours so that they solidify (crystallization phase of the starches) to such an extent that they can then be vacuum-packed without the risk to crush the wheel itself which at that point will already be sufficiently solidified. As an alternative to vacuum packaging, a modified atmosphere packaging can be implemented, with a "wax" coating or any other method suitable for sealing the product, preventing drying/dehydration thereof.

In step F) the product is placed in the blast chillers at a temperature comprised from -40°C to +10°C, preferably at -20°C, for the time necessary for the internal cooling of the product (therefore, in proportion to the weight and shape of any wheel).

In fact, within 24/48 hours, the product will have already reached a level of crystallization able to simulate the effect of a natural aging of the product, while remaining sealed under vacuum (unlike traditional dairy cheeses, where instead aging must be necessarily carried out by keeping the product in a controlled environment, for a long time, and therefore at high costs and potential vacuum casing is instead used to block the aging).

The result will be a wheel of "vegetable cheese" perfectly identical in appearance, structure and flavour to the classic Parmesan, Grana, Scamorza, etc., as well as in their variants that can be made with this process and this composition.

Thanks to the use of the specific ingredients above mentioned, the final product, if sauteed in a pan or used for cooking in the oven, it softens a lot making it suitable for processing even of very complex recipes by professionals, just as the real cheeses would involve, even the strongly aged ones.

The product is perfectly grated exactly as a traditional Parmesan or other hard cheese and the aesthetic/sensorial result is also in this case, comparable to the original of dairy origin.

The final result is indeed a product with a typically realistic appearance, absolutely comparable to other aged cheeses of animal origin, both in texture and structure and in taste, but characterized by the complete absence of both animal substances (cholesterol, etc.), and, preferably, gluten. This product will be perfectly integrated to be sold also within circuits typically reserved for products of animal origin (cheese counter).

The above described products, plant-based substitutes of hard or plastic cheese, are preferably vegetable products and without gluten, i.e. gluten free.

All ingredients are commercially widely available.

Another object is a plant-based substitute of hard or plastic cheese obtainable from the above described process, including all the different and preferred embodiments.

According to a preferred embodiment, a plant-based substitute of hard or plastic cheese obtainable by the above described process is characterized by a flake, grainy and fibrous structure.

According to a preferred embodiment, the plant-based substitute of hard or plastic cheese obtainable from the process or the plant-based substitute of hard or plastic cheese comprising from 10% to 70% w/w of swallowed wheat starch, has an amount of gluten comprised from 0.001 ppm to 20 ppm. Ppm means parts per million, i.e., for example, 1 ppm means 1 mg per 1 kg of product; 20 ppm means, for example, 20 mg per kg of product; 0.001 ppm means, for example, 1 microgram per kg of product, i.e. one nanogram per gram of product.

According to a preferred embodiment, the plant-based substitute of hard or plastic cheese is without gluten, i.e. gluten-free, i.e. with an amount of gluten comprised between 0.001 ppm and 20 ppm.

According to a preferred embodiment, the plant-based substitute of hard or plastic cheese obtainable by the above described process comprises a plant-based composition having an amount of gluten comprised from 0.001 ppm to 20 ppm, i.e. they are gluten-free.

According to a more preferred embodiment, the plant-based substitute of hard or plastic cheese obtainable by the above described process is characterized by the presence of the grainy structure and comprises a plant-based composition having an amount of gluten comprised from 0.001 ppm to 20 ppm.

Another object is the use of wheat starch for the preparation of a plant-based substitute of hard or plastic cheese.

According to a preferred embodiment, is preferred the use of wheat starch for the preparation of a plant-based substitute of hard or plastic cheese in amount comprised between 10% and 40% p/p.

## Claims

1. Plant-based substitute of hard or plastic cheese comprising from 10% to 70% w/w of wheat starch.

2. Plant-based substitute of hard or plastic cheese according to claim 1, further comprising:
- from 1% to 30% w/w of potato flakes,
- from 2% to 55% w/w coconut oil, or other saturated vegetable oil,
- from 20% to 80% w/w of purified water.

3. Plant-based substitute of hard or plastic cheese according to anyone of the claims from 1 to 2, comprising:
- from 20% to 40% w/w wheat starch,
- from 2% to 10% w/w of potato flakes,
- from 2% to 20% w/w coconut oil, or other saturated vegetable oil,
- from 20% to 40% w/w of purified water.

4. Plant-based substitute of hard or plastic cheese according to any one of claims from 1 to 3, wherein the wheat starch is swallowed wheat starch.

5. Process for the preparation of a plant-based substitute of hard or plastic cheese according to any one of claims from 1 to 4 comprising the following steps:
A) in a suitable container prepare a mixture comprising:
- from 10% to 70% w/w wheat starch,
- from 1% to 30% w/w of potato flakes,
- from 2% to 55% w/w coconut oil, or other saturated vegetable oil,
- from 20% to 80% w/w of purified water;
B) combining until to obtain a homogeneous dough;
C) filling the inside of moulds or casings with the homogeneous dough prepared in step B) and inserting said moulds or casings into bags for vacuum cooking, applying vacuum and hermetically closing them, or
filling the inside of moulds with the homogeneous dough prepared in step B) and hermetically closing them;
D) cooking the homogeneous dough inside the moulds or casings of step D) at a temperature comprised from 40°C to 110°C for a time comprised from 30 to 120 minutes;
E) alternatively, to steps C) and D), cooking the homogeneous dough of step B) at a temperature comprised between 40°C and 110°C for a time comprised from 30 to 120 minutes, then inserting the cooked dough into the moulds, and then inserting the moulds into bags for vacuum cooking, applying the vacuum and hermetically closing them;
F) reducing the temperature of the product of step D) or E) to a temperature comprised from -40°C to 10°C.

6. Process according to claims 5, wherein in step A) the mixture can comprise one or more of the following further ingredients:
- from 0,10% to 25% w/w of chickpea flour,
- from 0.10% to 15% w/w of pea, soy, rice or similar protein,
- from 0,10% to 8% w/w yeast flakes,
- from 0.05% to 8% w/w onion powder,
- from 0.50% to 4% w/w salt,
- from 0.1% to 1.90% w/w citric acid,
- from 0.1% to 1.90% w/w lactic acid,
- from 0.10% to 1.99% w/w of a mixture of kappa, iota and lambda carrageenan,
- from 2% to 25% w/w of fruit juice,
- from 10% to 30% w/w olive or seed oil.

7. Process according to any one of claims from 5 to 6, wherein in step A) firstly the powdered ingredients are mixed thus to obtain a homogeneous mixture of powdered ingredients, and then the ingredients in liquid state are added.

8. Process according to any one of claims from 5 to 7, wherein in step A) the wheat starch is swallowed wheat starch.

9. Plant-based substitute of hard or plastic cheese obtainable by the process according to any one of claims from 5 to 8.

10. Plant-based substitute of hard or plastic cheese according to claim 4 or claim 8 and 9, having an amount of gluten comprised from 0.001 ppm to 20 ppm.

11. Use of wheat starch for the preparation of a plant-based substitute of hard or plastic cheese.
